# FASCICULE DE BREVET EUROPEEN

(11) **EP 1 130 749 B1**
(45) Date de publication et mention de la délivrance du brevet: **24.08.2005**
(21) Numéro de dépôt: 01400512.8
(22) Date de dépôt: 28.02.2001
(51) Int. Cl.: H02K 49/04, H02K 9/22, F24J 3/00

(54) **Dispositif de freinage à courants de Foucault**
Wirbelstrombremse
Eddy current retarder

(30) Priorité: 03.03.2000 FR 0002737
(43) Date de publication de la demande: 05.09.2001
(73) Titulaire: Drecq, Daniel, 78610 Saint Léger en Yvelines (FR)
(72) Inventeur: Drecq, Daniel, 78610 Saint Léger en Yvelines (FR)
(74) Mandataire: Abello, Michel

(56) Documents cités:
- FR-A- 2 489 939
- GB-A- 2 307 961
- US-A- 2 747 702
- US-A- 3 915 262

## Description

L'invention est relative à un dispositif de freinage à courants de Foucault, du type comportant au moins un échangeur de chaleur pour dissiper l'énergie thermique due aux courants de Foucault lors du freinage.

GB 2 307 961 A et US 3 915 262 A divulguent des freins à friction conformes au préambule de la revendication 1.

Pour mesurer les performances des moteurs, notamment des moteurs à explosion, on utilise des dispositifs de freinage reliés à l'arbre de sortie du moteur thermique.

Dans les dispositifs de freinage à courants de Foucault, un rotor denté est entraîné par l'arbre de sortie du moteur thermique à tester. Ce rotor denté entraîné en rotation comporte des dents situées en périphérie qui coupent les lignes de force du champ magnétique créé par une bobine. La coupure du champ magnétique par les dents du rotor et l'entrefer entre les faces latérales des dents et les parties métalliques adjacentes engendrent des courants de Foucault dans la matière conductrice située de part et d'autre du rotor denté. Ces courants de Foucault engendrent une énergie thermique importante dans cette matière, qu'il est ainsi nécessaire de refroidir pour éliminer l'énergie calorifique engendrée par les courants de Foucault.

A cet effet, de manière connue, on place des échangeurs de chaleur de part et d'autre du rotor denté : ces échangeurs de chaleur sont refroidis par une circulation importante d'un liquide de refroidissement.

Compte tenu de l'effet de freinage important dû aux courants de Foucault, on peut considérer le frein à courants de Foucault comme un dispositif qui transforme l'énergie mécanique de freinage en énergie calorifique qui doit être dissipée dans ces échangeurs de chaleur. Ces échangeurs de chaleur sont soumis, lors des variations de régime et surtout de charge du moteur thermique à tester, à de très fortes variations de température : ainsi, la matière des échangeurs subit des sauts de température de 20°C à 400°C lors d'une montée en régime et charge du moteur thermique. Ces sauts de température entraînent des fatigues thermiques de la matière des échangeurs, ce qui conduit à l'apparition de fissures et à une détérioration rapide des échangeurs.

De nombreux systèmes ou principes d'échangeurs de chaleur pour frein à courants de Foucault ont été proposés, sans pouvoir obtenir jusqu'à présent une longévité et une fiabilité suffisantes permettant des utilisations de longue durée.

Les contraintes mécaniques, thermiques et hydrauliques ont conduit à un type préféré d'échangeur, dans lequel le parcours du liquide de refroidissement s'effectue avec des pertes de charge importantes, de sorte qu'il n'est pas possible d'augmenter le débit de liquide de refroidissement traversant ces échangeurs.

De manière générale, à titre de liquide de refroidissement préféré, on utilise de l'eau de refroidissement. Cette eau de refroidissement pénètre par une entrée située en périphérie de l'échangeur et ressort par une sortie disposée vers le centre de l'échangeur.

Un premier but de l'invention est de proposer un nouvel agencement d'échangeur de chaleur pour frein à courants de Foucault, de manière à pouvoir augmenter le débit d'eau de refroidissement et décroître ainsi le niveau de température subi par la matière des échangeurs.

Un deuxième but de l'invention est de permettre un fonctionnement sur une longue durée d'un dispositif de freinage à courants de Foucault, pour améliorer la disponibilité et la durée d'utilisation de ces dispositifs.

Un troisième but de l'invention est de diminuer les pertes de charge subies par le liquide de refroidissement lors de sa circulation dans l'échangeur.

Un quatrième but de l'invention est de proposer une conformation de dispositif de freinage à courants de Foucault, dans lequel la précision et la qualité de mesure du couple moteur sont augmentés, grâce à une diminution du couple induit par les circuits d'eau de refroidissement.

Un cinquième but de l'invention est de proposer une conformation d'échangeur de chaleur permettant le remplacement des échangeurs de chaleur pour frein à courants de Foucault de type connu.

L'invention a pour objet un dispositif de freinage à courants de Foucault, du type comportant au moins un échangeur de chaleur pour dissiper l'énergie thermique due aux courants de Foucault lors du freinage, caractérisé par le fait que l'échangeur de chaleur est agencé pour définir un parcours de liquide de refroidissement prédéterminé pour minimiser les pertes de charge et maximiser le débit de liquide de refroidissement circulant à travers l'échangeur, en vue de diminuer les variations de température de travail de l'échangeur de chaleur.

Le dispositif selon l'invention comporte deux échangeurs de chaleur symétriques, dont les passages d'entrées, les circuits et les passages de sorties d'eau sont disposées symétriquement, de manière à compenser les efforts dus aux courants de liquide de refroidissement et minimiser ainsi le couple résiduel correspondant.

Selon d'autres caractéristiques de l'invention :
- le parcours de liquide de refroidissement est prédéterminé pour que la circulation du liquide de refroidissement s'effectue pratiquement constamment dans un même sens d'enroulement,
- le parcours de liquide de refroidissement peut comporter plusieurs sections, par exemple, de profil rectangulaires ou rectangulaires et semi-toriques raccordées entre elles par des canaux de jonction ; ou, alternativement, le parcours de liquide de refroidissement peut être sensiblement conformé en forme de spirale.
- le parcours du liquide de refroidissement peut, dans un autre mode de réalisation, être réalisé au moins partiellement par enroulement d'un tube de section sensiblement constante.
- la circulation du liquide dans chacun des deux échangeurs s'effectue de préférence sensiblement autour de l'axe de rotation du rotor, les sens de circulation dans lesdits deux échangeurs étant opposés l'un de l'autre.

L'invention sera mieux comprise grâce à la description qui va suivre, donnée à titre d'exemple non limitatif en référence aux dessins annexés, dans lesquels :
- la figure 1 représente schématiquement une vue en perspective d'un dispositif de freinage à courants de Foucault,
- la figure 2 représente schématiquement une vue en coupe partielle par un plan vertical passant par l'axe de rotation du rotor denté d'un dispositif de freinage à courants de Foucault,
- la figure 3 représente schématiquement une vue en élévation dans le sens des flèches III des figures 1 et 2 d'un dispositif de freinage à courants de Foucault,
- la figure 4 représente schématiquement une vue partielle en élévation et une vue en coupe selon la ligne IV-IV d'un échangeur de chaleur de type connu pour frein à courants de Foucault,
- la figure 5 représente schématiquement une vue partielle en élévation avec coupe selon la ligne V-V d'un échangeur de chaleur selon l'invention,
- la figure 6 représente schématiquement un diagramme comparatif de profil de température en fonction du régime d'un moteur thermique à tester,
- la figure 7 représente schématiquement une vue partielle en élévation et une vue partielle en coupe selon la ligne VII-VII d'un autre échangeur de chaleur selon l'invention,
- la figure 8 représente schématiquement une vue en coupe d'un dispositif de freinage à courants de Foucault selon l'invention, à deux échangeurs de chaleur,
- la figure 9 représente schématiquement une vue en perspective d'un dispositif de freinage à courants de Foucault selon l'invention, à deux échangeurs de chaleur symétriques,
- la figure 10 représente un diagramme montrant l'influence de la pression d'alimentation sur la mesure du couple,
- la figure 11 représente une vue en plan de la disposition des échangeurs de chaleur selon l'invention.

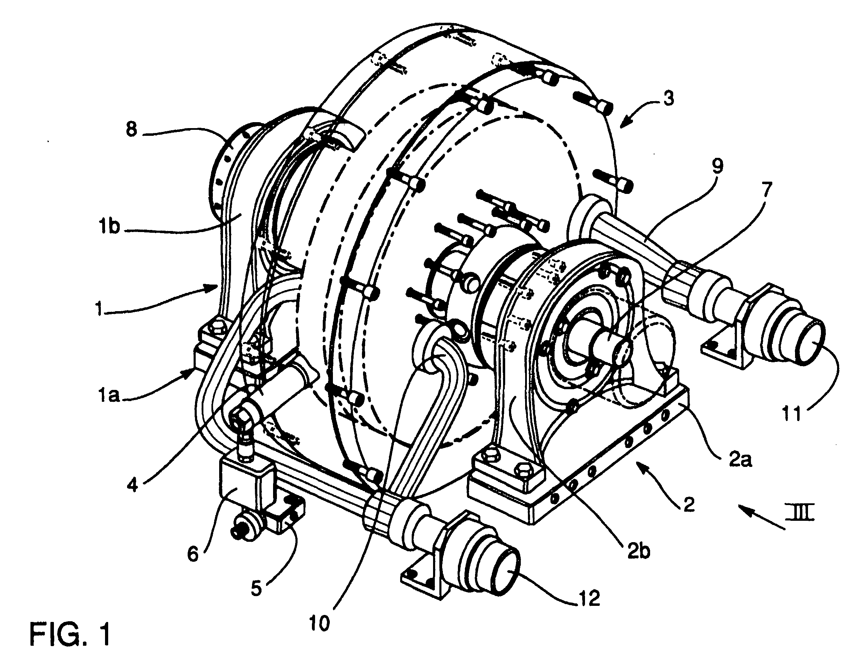

En référence aux figures 1 à 3, les éléments identiques ou fonctionnellement équivalents sont repérés par des chiffres de référence identiques.

Sur la figure 1, un dispositif de freinage par courants de Foucault est monté sur deux ensembles 1 et 2 formant palier de rotation. Chaque palier 1 ou 2 comporte une platine 1a ou 2a de fixation sur un bâti et un support 1b ou 2b. Les supports 1b et 2b sont constitués en paliers oscillants supportant le corps 3 du dispositif.

Le corps 3 comporte une extension 4 constituant un bras anti-rotation qui est relié à un élément 5 solidaire d'un bâti immobile par l'intermédiaire d'un capteur d'effort 6 permettant la détermination du couple de freinage engendré par le dispositif à courants de Foucault.

Un arbre 7 destiné à être accouplé avec un moteur thermique est monté libre en rotation à l'intérieur du corps 3 du dispositif, dont il dépasse par une extrémité arrière et par une extrémité avant 8 constituée en plateau d'accouplement à un moteur thermique non représenté.

Une conduite d'entrée périphérique 9 d'eau de refroidissement permet l'alimentation d'un échangeur thermique interne au corps, tandis qu'une conduite de sortie 10 voisine du centre du corps 3 permet la sortie de cette eau de refroidissement. De préférence, le dispositif comporte deux conduites d'entrées d'eau 9 et deux conduites de sorties d'eau 10 : les conduites d'entrées 9 d'eau de refroidissement sont raccordées entre elles et reliées à une alimentation commune 11, tandis que les conduites de sorties d'eau 10 sont raccordées entre elles et reliées à une évacuation commune 12.

En raison du fait que les conduites d'entrées 9 d'eau de refroidissement et les conduites de sorties 10 d'eau de refroidissement sont connectées au corps 3 sur des rayons différents et sont inclinées par rapport à ces rayons d'entrée et de sortie selon un angle important voisin de 45 degrés d'angle, il apparaît un couple résiduel dû à la circulation de l'eau de refroidissement.

La valeur de ce couple, mesurée par le capteur d'effort 6 en l'absence de moteur à mesurer, varie en fonction des variations de pression, des débits d'eau et des pertes de charge internes des échangeurs. Ce couple résiduel entraîne de fait une erreur de mesure lors des mesures subséquentes de couple des moteurs à mesurer.

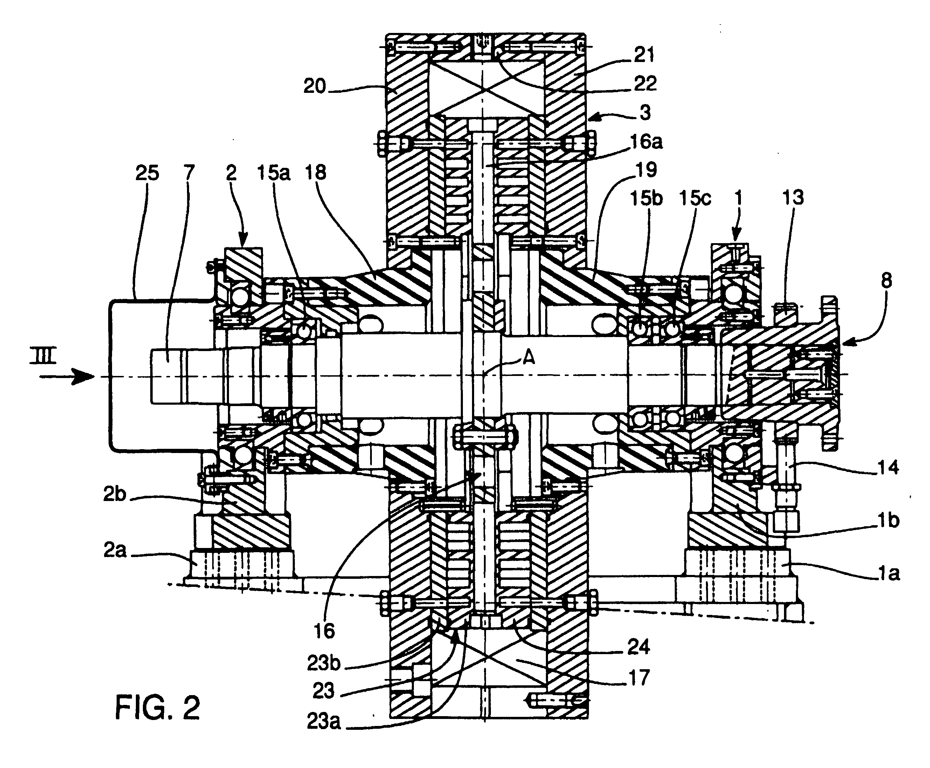

Sur la figure 2, l'arbre 7 d'accouplement au moteur thermique non représenté porte une roue dentée 13 permettant la mesure de la vitesse de rotation grâce au capteur tachymétrique 14 fixé au support 1b. L'arbre 7 destiné à être accouplé au moteur thermique non représenté est monté libre en rotation sur des roulements 15a, 15b, 15c, et porte également un rotor 16 entraîné en rotation par l'arbre et portant des dents 16a coupant le flux magnétique engendré par une bobine magnétique 17 située en périphérie. Le corps 3 du dispositif de freinage est monté oscillant sur les paliers 1 et 2 et comporte deux parties centrales 18 et 19 en alliage léger et deux plateaux 20 et 21 portant la bobine 17, entretoisés par une partie cylindrique 22. Les plateaux 20 et 21 servent de support à deux échangeurs 23 et 24 situés de part et d'autre du rotor 16 entraîné en rotation par l'arbre 7 lors du test d'un moteur thermique.

Lorsque les lignes de force du champ magnétique créé par la bobine magnétique 17 sont coupées par le rotor 16 denté entraîné en rotation par un moteur thermique à tester, des courants de Foucault se développent principalement dans la matière des échangeurs 23 et 24 dont la température augmente instantanément.

Le couple de renversement exercé en réaction sur le corps 3 du dispositif est déterminé par la mesure de l'effort appliqué sur le capteur d'effort 6, situé à une distance connue de l'extension 4 qui forme un bras de levier de rayon connu. Ceci donne ainsi le couple moteur du moteur thermique entraînant en rotation l'arbre 7, tandis que le régime de ce moteur thermique est mesuré par le capteur tachymétrique 14 placé en regard de la roue dentée 13. Les déterminations du couple moteur et du régime du moteur permettent de déterminer instantanément la puissance du moteur thermique en cours d'essai.

Compte tenu de l'échauffement de la matière des échangeurs 23 et 24, ces échangeurs présentent une forte épaisseur et des canaux rectangulaires de section prédéterminée pour limiter les déformations mécaniques et pour conserver une bonne stabilité dimensionnelle lors des échauffements et refroidissements successifs.

Bien que l'invention soit décrite en référence à un dispositif comportant une entretoise cylindrique 22 radialement extérieure, elle n'est nullement limitée à ce mode de réalisation particulier et s'étend également à tout autre type de dispositif de freinage à courants de Foucault, par exemple à des dispositifs comportant deux bobines placées à l'extérieur du corps et permettant l'évacuation de l'air emprisonné en haut des dents du rotor.

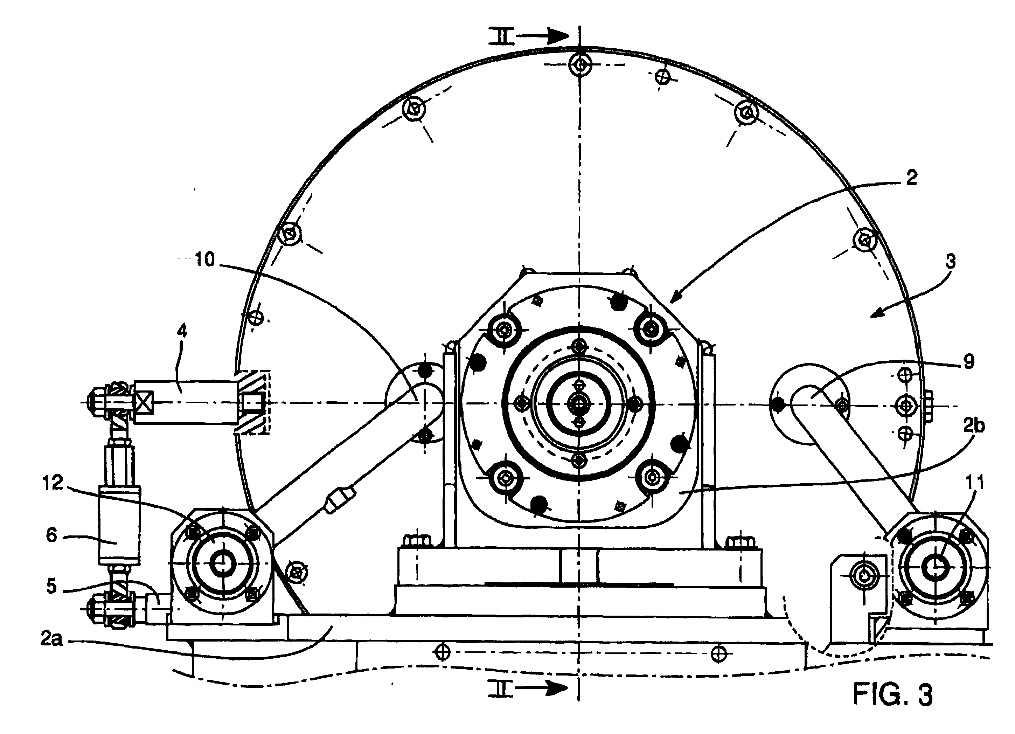

Sur les figures 2 et 3, on voit que l'extrémité dépassante de l'arbre 7 est protégée par un capot 25 fixé par des vis appropriées.

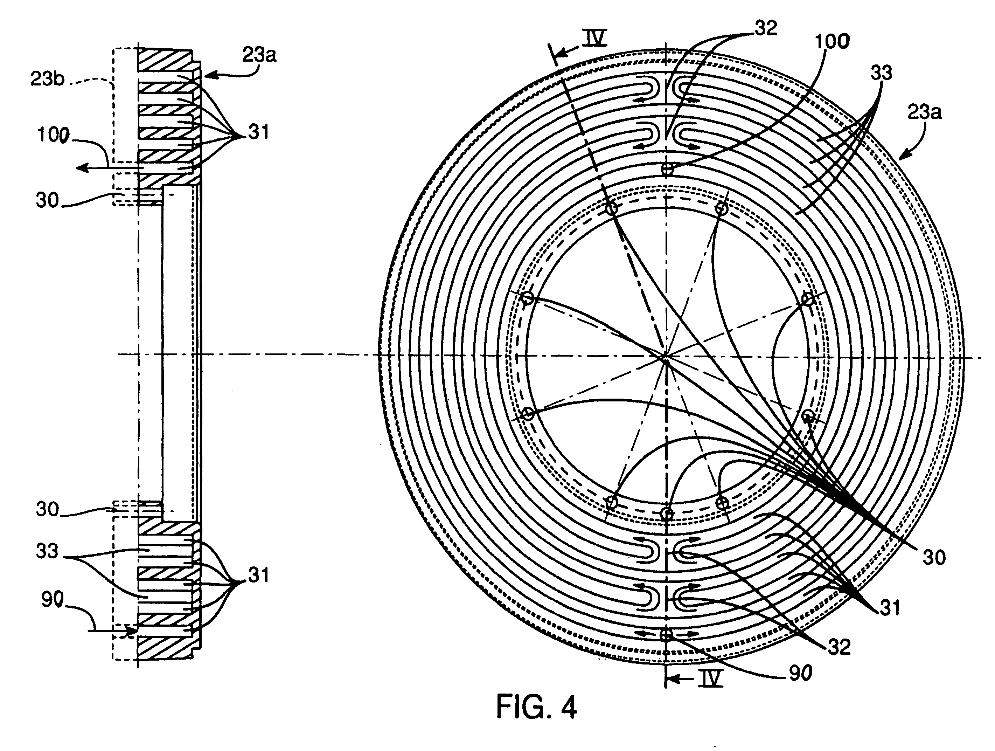

En référence à la figure 4, une partie 23a d'échangeur de chaleur de type connu est représentée en traits pleins, tandis que sa plaque de couverture 23b, qui peut également être réalisée directement dans les plateaux 20 et 21, est représentée en traits interrompus. La partie 23a est réalisée dans une plaque de forte épaisseur, de préférence par usinage, de manière à présenter des trous de positionnement et de fixation 30 à la plaque 23b formant couvercle et de manière à présenter des canaux 31 rectangulaires de circulation d'eau.

Le passage d'entrée d'eau et le passage de sortie d'eau sont situés sur un même diamètre : le passage d'entrée d'eau 90 est situé sur l'axe diamétral de la rainure circulaire la plus extérieure, tandis que le passage de sortie d'eau 100 est situé sur la rainure circulaire la plus intérieure. Chaque rainure 31 de passage d'eau est reliée à la rainure de passage d'eau suivante par un passage 32 pratiqué dans une cloison 33 de séparation, de façon à définir des parcours demi-circulaires pour l'eau de refroidissement.

L'eau entre ainsi par le passage d'entrée 90, chaque moitié du débit se répartissant dans chaque partie de la première rainure circulaire 31 pour effectuer un demi-tour, les deux moitiés se rejoignant au premier passage 32 et se répartissant à nouveau par moitié sur les demi-tours suivants dans la rainure circulaire 31 suivante et ainsi de suite, jusqu'au passage de sortie d'eau 100. Ce mode de réalisation permet d'obtenir une construction d'échangeur présentant une bonne rigidité et une bonne stabilité aux déformations répétées engendrées par la dilatation thermique. La circulation de l'eau peut également être effectuée en sens inverse, c'est-à-dire entrant par le passage 100 situé sur la rainure la plus au centre et sortant par la rainure située la plus à l'extérieur. Cependant, ce mode de circulation présente l'inconvénient d'un passage d'environ une moitié du débit d'eau total sur chaque demi-tour d'échangeur, et également l'inconvénient d'une forte perte de charge lors du changement de sens du débit d'eau à chaque passage 32. Il en résulte une limitation du débit d'eau de refroidissement admissible dans l'échangeur, car une tentative d'augmentation du débit entraîne très rapidement une turbulence de l'écoulement qui ne permet pas de refroidir plus efficacement l'échangeur lors d'une montée rapide en régime ou en charge des moteurs thermiques à essayer.

Ces inconvénients se rencontrent également lorsque l'on tente d'inverser le sens de circulation de l'eau en faisant entrer l'eau par le passage 100 et en l'évacuant par le passage 90.

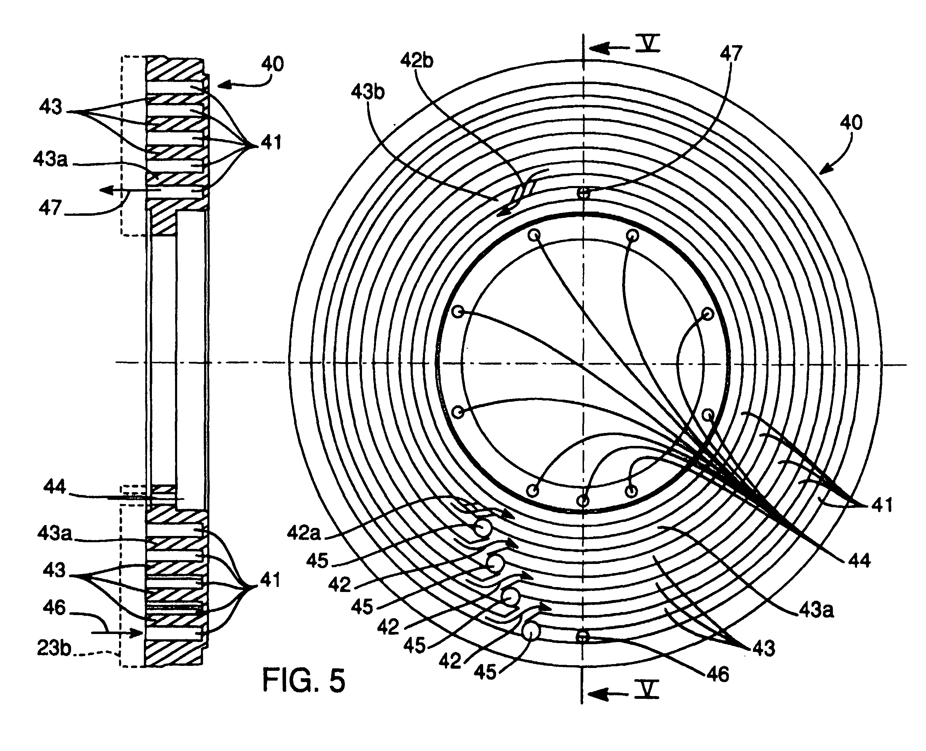

En référence à la figure 5, une partie 40 d'échangeur est apte à remplacer une partie 23a de type connu pour constituer avec une plaque de couverture 23b de type connu un échangeur selon l'invention.

La partie 40 d'échangeur selon l'invention est agencée pour définir un parcours prédéterminé d'eau de refroidissement, en minimisant les pertes de charge par rapport à l'échangeur connu décrit en référence à la figure 4 et en maximisant le débit de refroidissement circulant à travers l'échangeur, en vue de diminuer les variations de température de travail de l'échangeur.

A cet effet, la partie 40 d'échangeur selon l'invention comporte une pluralité de canaux circulaires 41 de section rectangulaire.

Les canaux circulaires 41 présentent ainsi, au moins localement, une forme torique à section rectangulaire ou rectangulaire et semi-toroïdale.

L'invention propose un parcours de l'eau de refroidissement agencé pour minimiser les pertes de charge, du fait que la circulation de l'eau de refroidissement s'effectue pratiquement constamment dans un même sens d'enroulement. A cet effet, on prévoit que les sections toriques définies par les canaux circulaires 41 sont reliées de manière à définir un sens de circulation constant dans un même sens d'enroulement, grâce à la canalisation de l'eau de refroidissement dans des passages 42, 42a et 42b. Les passages 42 sont des passages pratiqués dans les nervures subsistantes 43 par un usinage orienté dans le sens de l'écoulement d'eau de refroidissement, de manière à minimiser les pertes de charge. Les passages 42 sont usinés sur toute la hauteur des nervures 43. Les passages 42a et 42b sont pratiqués à mi-hauteur de la nervure 43a, en étant également usinés dans le sens de l'écoulement de l'eau de refroidissement. Chaque passage 42a ou 42b est défini pour permettre le passage d'environ la moitié du débit d'eau nominal circulant dans une rainure 41.

Des orifices de fixation 44 identiques aux orifices de positionnement et de fixation 30 de la figure 4 sont également prévus pour permettre l'interchangeabilité d'une partie 23a de type connu, par une partie 40 d'échangeur selon l'invention.

Pour éviter toute circulation à contre-courant d'eau de refroidissement, on obture avantageusement les canaux toriques 41 par des pions 45 disposés à proximité des passages 42.

Les pions 45 sont de préférence emmanchés dans des usinages ou des perçages prévus à cet effet, étant précisé que l'obturation réalisée par chaque pion 45 placé dans un canal 41 correspondant s'effectue sur sensiblement toute la hauteur du canal 41.

Ainsi, grâce à l'invention, un échangeur de chaleur pour dispositif de freinage à courants de Foucault peut être réalisé de manière simple par un usinage circulaire de rainures 41, un fraisage oblique de passages 42, 42a et 42b, et une obturation par des goupilles cylindriques 45 des canaux 41 usinés dans une plaque de forte épaisseur.

L'eau de refroidissement entre par exemple par un passage d'entrée d'eau 46 située au même emplacement que le passage d'entrée d'eau 90 décrit en référence aux figures 1 à 4, et sort, par exemple par un passage de sortie 47 disposé au même emplacement que le passage de sortie d'eau 100 décrit en référence aux figures 1 à 4.

On peut également envisager une réalisation analogue à celle de la figure 5 en inversant le sens de circulation de l'eau, sans sortir du cadre de la présente invention.

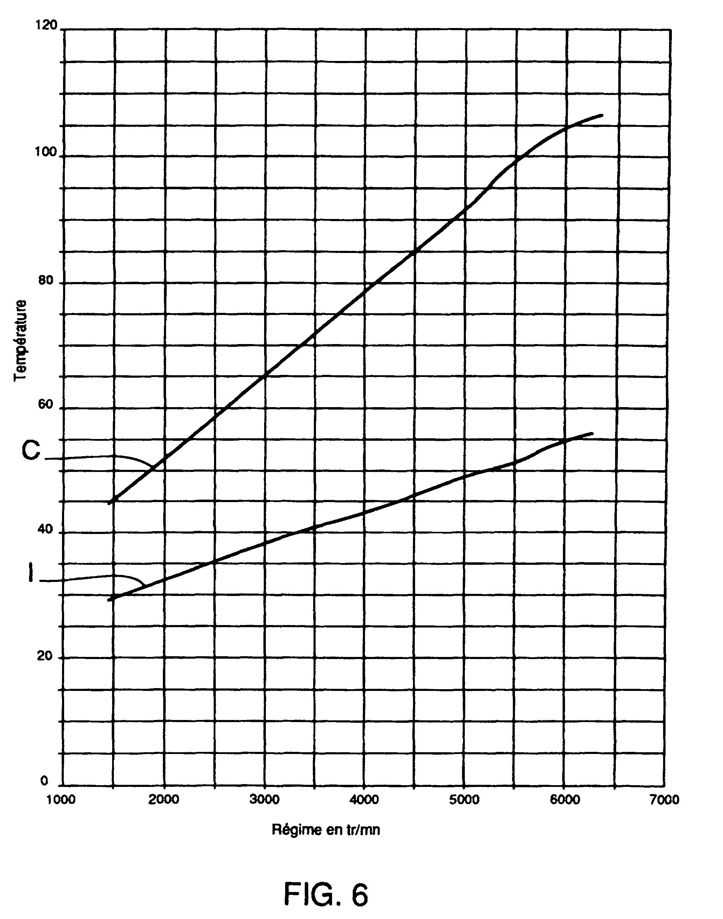

En référence à la figure 6, un diagramme comparatif indique la différence de température d'eau en entrée et en sortie de deux échangeurs de chaleur pour dispositif de freinage à courants de Foucault.

La courbe supérieure C est une courbe d'essai réalisée avec un échangeur de type connu décrit en référence à la figure 4, tandis que la courbe inférieure I est réalisée avec un échangeur de chaleur selon l'invention décrit en référence à la figure 5.

La comparaison des deux courbes met en évidence le fait que l'augmentation du régime moteur, à charge constante, de 1500 tours à 6000 tours/minute provoque une augmentation de différence de température de sortie et d'entrée qui passe de 45°C pour 1500 tours/minute à 105°C pour 6000 tours/minute. Cette variation de différence de température est révélatrice d'échauffements importants dans l'échangeur de chaleur de type connu décrit en référence à la figure 4.

Au contraire, grâce à l'invention, la différence des températures de sortie et d'entrée passe de 30°C pour 1500 tours/minute à 55°C pour 6000 tours/minute, ce qui réduit notablement la fatigue due à la dilatation thermique de l'échangeur thermique selon l'invention décrit en référence à la figure 6.

Cette disposition avantageuse permet ainsi une utilisation plus longue d'un dispositif à courants de Foucault utilisant un échangeur selon l'invention, du fait d'une longévité supérieure de l'échangeur de chaleur selon l'invention.

L'invention s'étend non seulement au cas des dispositifs de freinage à courants de Foucault incorporant un échangeur de chaleur selon l'invention, mais également aux échangeurs de chaleur pour dispositif de freinage à courants de Foucault considérés comme pièces de rechange ou pièces de remplacement d'un échangeur de type connu.

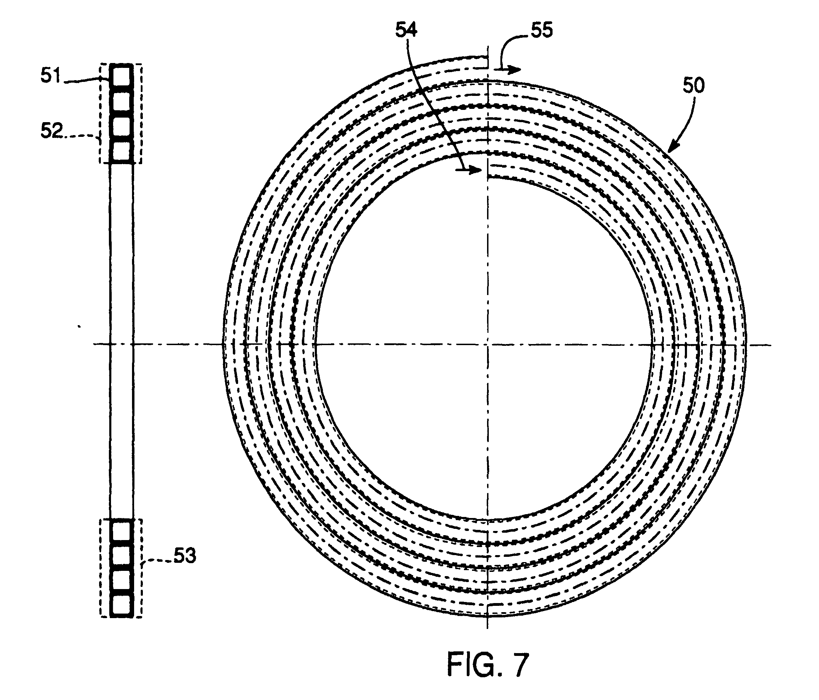

En référence à la figure 7, un autre mode de réalisation selon l'invention d'échangeur de chaleur pour dispositif de freinage à courants de Foucault comporte une partie 50 constituée par un tube carré ou rectangulaire 51 cintré en forme de spirale.

Le tube 51 présente, de préférence, une épaisseur supérieure à 2 mm, de manière à présenter une bonne rigidité et une faible déformation lors du cintrage.

Pour éviter toute déformation latérale de la spirale, on peut avantageusement prévoir deux disques 52 et 53 de maintien de forte épaisseur disposés de part et d'autre du tube enroulé en spirale. Cet échangeur de chaleur selon l'invention présente l'avantage d'une fabrication simple et économique, en permettant le passage de la totalité du débit d'eau et en minimisant les pertes de charge lors du passage. Pour diminuer encore les pertes de charge, on peut prévoir un passage d'entrée d'eau 54 sensiblement tangentiel à l'enroulement en spirale et un passage de sortie d'eau de refroidissement 55 sensiblement tangentiel au diamètre extérieur de l'enroulement en spirale.

On peut également, sans sortir du cadre de la présente invention, inverser le sens de circulation.

On peut enfin, pour réaliser un parcours d'eau en spirale, usiner directement dans une plaque de forte épaisseur une rainure en spirale au moyen d'une machine à commande numérique.

Cependant, cet usinage est plus délicat en raison du fait que la profondeur d'usinage est très supérieure à la largeur de la rainure d'usinage.

La rainure en spirale subsistant après usinage doit présenter un profil présentant un pied de forte résistance pour éviter toute fissuration lors du cyclage thermique de l'échangeur.

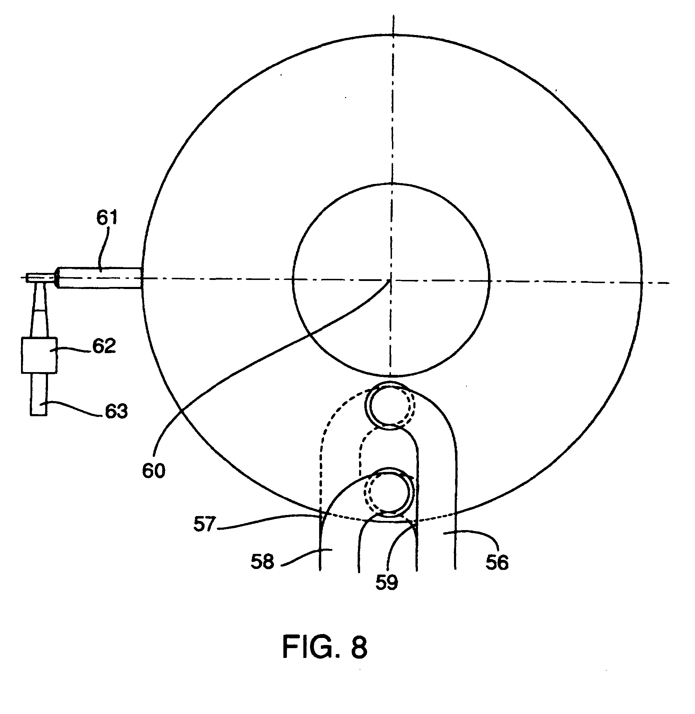

En référence à la figure 8, un dispositif de freinage à courants de Foucault selon l'invention comporte deux échangeurs de chaleur selon l'invention à circulations d'eau en spirale.

Les deux échangeurs sont de préférence identiques, de manière à réduire leurs coûts de fabrication, et sont disposés de chaque côté du rotor 16, tournés de 180° l'un par rapport à l'autre autour d'un axe sensiblement perpendiculaire à l'axe 60 du dispositif. De préférence, ils sont sensiblement symétriques l'un de l'autre par rapport à un axe vertical passant par le centre A du rotor 16. Les sens de circulation de l'eau de refroidissement dans les deux échangeurs sont ainsi opposés, ce qui permet que les forces et moments de force exercés sur le dispositif de freinage par la circulation d'eau dans les deux échangeurs se compensent sensiblement deux à deux, aux différences de pertes de charges entre les deux échangeurs près.

La conduite d'entrée 56 d'eau du premier échangeur et la conduite d'entrée d'eau 57 du deuxième échangeur sont symétriques l'une de l'autre par rapport à un plan vertical sensiblement perpendiculaire à l'axe de rotation 60 du rotor 16. De même, la conduite de sortie 58 d'eau du premier échangeur et la conduite de sortie 59 d'eau du deuxième échangeur sont symétriques par rapport à ce plan.

En raison de la symétrie des efforts dus aux conduites d'entrées et aux conduites de sorties d'eau des échangeurs et en raison de la symétrie des circulations d'eau dans les deux échangeurs, aucun couple résiduel notable n'est détecté par le capteur d'effort 62 monté entre le bras anti-rotation 61 sensiblement horizontal et un élément 63 solidaire du bâti non représenté.

Cette disposition avantageuse des conduites d'entrées 56, 57 d'eau et des conduites de sorties 58, 59 d'eau des échangeurs selon l'invention présentant des circuits de refroidissement en spirales symétriques impose un usinage délicat de rainures en spirales au moyen d'une machine à commande numérique.

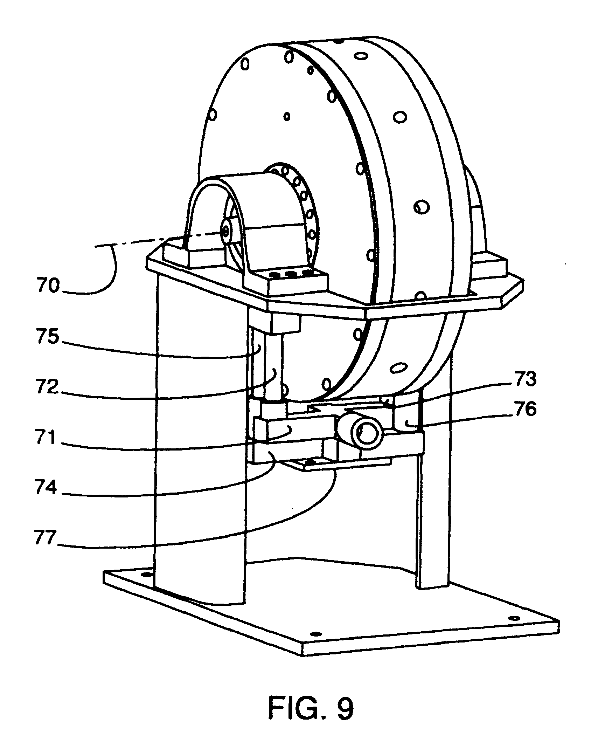

En référence à la figure 9, un autre mode de réalisation du dispositif selon l'invention comporte deux échangeurs de chaleur symétriques l'un de l'autre par rapport à un axe vertical passant sensiblement par le centre A du rotor 16.

Ce dispositif comporte une boîte d'admission d'eau 71 alimentant la conduite d'entrée d'eau 72 du premier échangeur et la conduite d'entrée d'eau 73 du deuxième échangeur, et une boîte 74 de sortie d'eau recevant l'eau sortant de la conduite de sortie 75 d'eau du premier échangeur et de la conduite de sortie 76 d'eau du deuxième échangeur. Les conduites d'entrées 72 et 73 d'eau sont symétriques l'une de l'autre par rapport à un axe vertical passant sensiblement par le centre A du rotor 16. De même, les conduites de sorties 74 et 75 d'eau sont symétriques par rapport à cet axe passant sensiblement par le centre A du rotor 16 et perpendiculaire au plan horizontal de mesure du bras anti-rotation non représenté.

Les boîtes 71 et 74 sont montées solidaires l'une de l'autre et fixées sur une platine 77 de montage sur un support non représenté.

La disposition symétrique des circuits d'eau de refroidissement a pour résultat une compensation des couples variables en fonction des variations des pressions, des débits d'eau et des pertes de charge correspondantes.

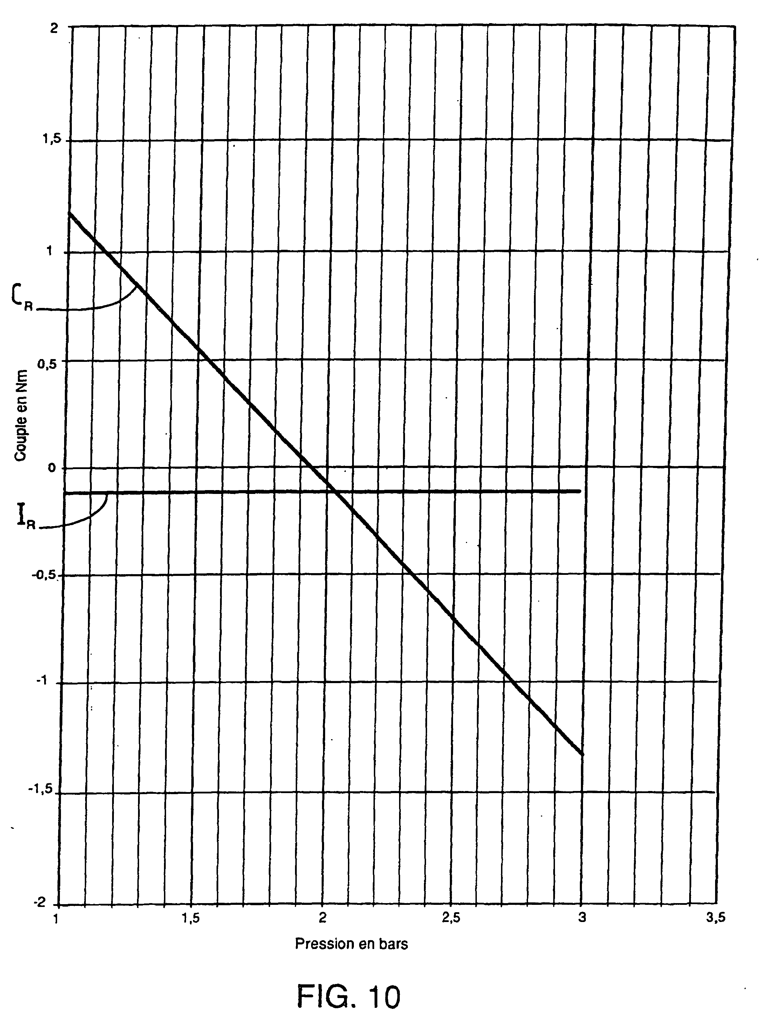

En référence à la figure 10, un diagramme comparatif indique le couple résiduel du dispositif mesuré par le capteur d'effort, en l'absence de moteur à mesurer, en fonction de la pression d'alimentation en eau de refroidissement.

Lorsque la pression d'alimentation varie de 1 à 3 bar, la courbe C_{R} relative à un dispositif de type connu indique une variation de couple résiduel de + 1,18 Nm à - 1,35 Nm, soit une amplitude de variation mesurée par le capteur d'effort de 2,53 Nm.

Au contraire, lorsque la pression d'alimentation varie de 1 à 3 bar, la courbe I_{R} relative au dispositif selon l'invention de la figure 9 indique une variation de couple résiduel de - 0,1 Nm à - 0,12 Nm, soit une amplitude de variation mesurée par le capteur d'effort de 0,02 Nm.

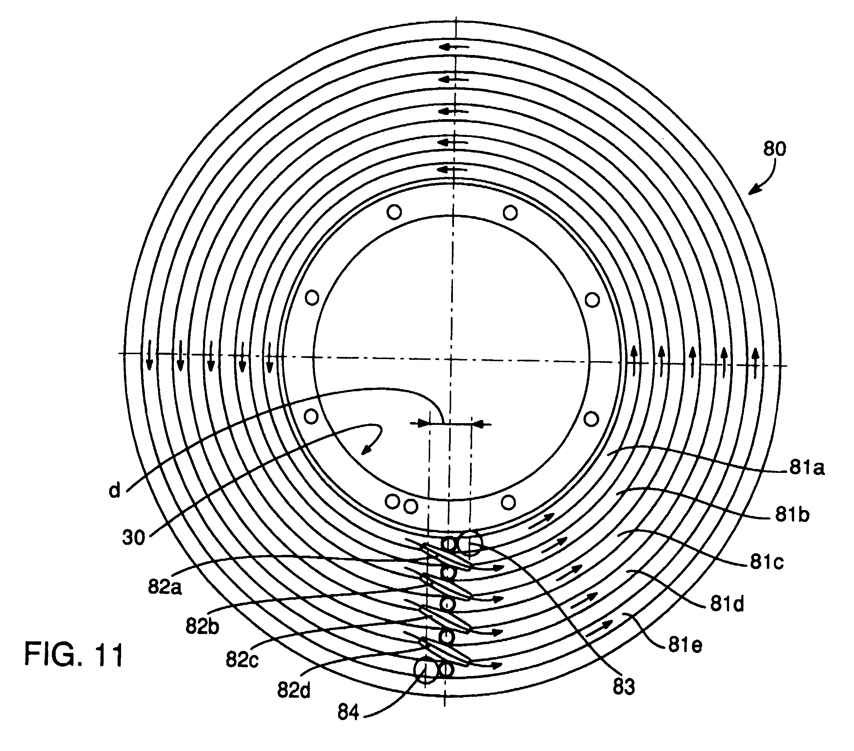

En référence à la figure 11, un échangeur selon l'invention destiné à un dispositif selon l'invention du genre représenté à la figure 9 comporte une partie 80 agencée pour définir un parcours prédéterminé d'eau de refroidissement, dans le sens d'enroulement correspondant aux flèches de circulation, dans les canaux 81a à 81e.

Les canaux 81a à 81e présentent au moins localement une forme annulaire à section rectangulaire ou à section rectangulaire et semi-toroïdale.

Les canaux circulaires 81a à 81e sont reliés par des passages 82a à 82d usinés dans les nervures subsistantes entre deux canaux consécutifs.

Ainsi, l'eau de refroidissement entrant par un passage d'entrée d'eau radialement intérieur 83, alimentée par exemple par la conduite d'entrée 72 de la figure 9, parcourt les canaux 81a à 81e dans le même sens d'enroulement en franchissant les passages 82a à 82d et ressort par un passage de sortie d'eau 84 radialement extérieur, pour se déverser par exemple dans la conduite de sortie 75 de la figure 9. La circulation de l'eau peut également être effectuée en sens inverse, c'est à dire entrant par le passage 84 radialement extérieur et sortant par le passage 83 radialement intérieur, sans sortir du cadre de la présente invention.

Pour minimiser la distance d séparant les projections verticales du passage d'entrée 83 d'eau et du passage de sortie 84 d'eau, on dispose les emplacements 85a à 85e des pions d'obturation en alignement radial, selon la verticale par exemple.

Le fait de rendre la distance d minimale permet de rapprocher le mode de fonctionnement hydraulique du dispositif de la figure 9 comportant deux échangeurs symétriques selon la figure 11 du mode de fonctionnement hydraulique de l'échangeur de la figure 8, afin de rendre négligeables les variations de couple résiduel I_{R} du dispositif en l'absence de moteur à mesurer, comme cela a été décrit en référence à la figure 10.

Cependant, l'obtention d'une distance d minimale en référence à la figure 11 nécessite de pratiquer des passages 82a à 82d de largeur inférieure à la largeur des canaux 81a à 81e ; bien que cette modification par rapport à la figure 5 des largeurs d'usinage des passages modifie localement le régime hydraulique en augmentant les vitesses de passage de l'eau et augmente la perte de charge totale de l'échangeur, cette modification ne constitue pas un inconvénient notable au regard de la diminution obtenue du couple résiduel et de l'augmentation de la précision et de la qualité de mesure des couples de moteurs à mesurer. En effet, la précision de mesure est voisine de la variation constatée du couple résiduel : cette précision est par conséquent, grâce à l'invention, environ cent fois meilleure que la précision de l'art antérieur.

L'invention décrite en référence à plusieurs modes de réalisation particuliers n'y est nullement limitée, et couvre, au contraire, toute modification de forme et toute variante de réalisation, dans le cadre des revendications.

## Revendications

1. Dispositif de freinage, du type comportant deux échangeurs de chaleur situés de part et d'autre d'un rotor (16) dudit dispositif pour dissiper l'énergie thermique lors du freinage, chaque échangeur de chaleur (40, 50, 80) étant agencé pour définir un parcours (41, 51, 81a-81e) de liquide de refroidissement prédéterminé pour que la circulation du liquide de refroidissement s'effectue pratiquement constamment dans un même sens d'enroulement pour minimiser les pertes de charge et maximiser le débit de liquide de refroidissement circulant à travers l'échangeur, en vue de diminuer les variations de température de travail de l'échangeur de chaleur, la circulation du liquide dans chacun des deux échangeurs s'effectuant sensiblement autour d'un axe de rotation dudit rotor, **caractérisé par** une symétrie desdits deux échangeurs (40, 50, 80) de chaleur par rapport à un axe de symétrie perpendiculaire audit axe de rotation dont les passages d'entrées (46, 54, 83), les circuits (41, 81) et les passages de sorties (47, 55, 84) d'eau sont disposées symétriquement par rapport audit axe de symétrie, de manière à compenser les efforts dûs aux courants de liquide de refroidissement et minimiser ainsi le couple résiduel correspondant autour dudit axe de rotation, les sens de circulation dans lesdits deux échangeurs étant opposés l'un de l'autre, ledit dispositif étant un dispositif de freinage à courants de Foucault dans lequel ladite énergie thermique est due aux courants de Foucault.

2. Dispositif selon la revendication 1, **caractérisé par le fait que** chaque parcours (41, 81a-81e) de liquide de refroidissement comporte plusieurs sections (41, 81a-81e) raccordées entre elles par des canaux (42, 42a, 42b, 82a-82d) de jonction.

3. Dispositif selon l'une quelconque des revendications 1 à 2, **caractérisé par le fait que** chaque parcours (51) de liquide de refroidissement est sensiblement en forme de spirale.

4. Dispositif selon l'une quelconque des revendications 1 à 3, **caractérisé par le fait que** chaque parcours du liquide de refroidissement est réalisé au moins partiellement par usinage.

5. Dispositif selon l'une quelconque des revendications 1 à 4, **caractérisé par le fait que** chaque parcours (51) du liquide de refroidissement est réalisé au moins partiellement par enroulement d'un tube (51) de section sensiblement constante.

6. Dispositif selon l'une quelconque des revendications 1 à 5, **caractérisé par le fait que** lesdits deux échangeurs sont sensiblement identiques.

7. Dispositif selon l'une des revendications 1 à 6, **caractérisé par le fait qu'**il est destiné à effectuer une mesure de couple d'un moteur, ledit dispositif comportant un corps (3) servant de support auxdits échangeurs et un arbre (7) monté en rotation par rapport audit corps et destiné à être accouplé avec ledit moteur de manière à être entraîné en rotation par celui-ci, ledit arbre portant un ou ledit rotor (16), ledit corps étant monté oscillant et comportant un bras anti-rotation qui est relié à un bâti immobile (5) par l'intermédiaire d'un capteur d'effort (6) de manière qu'une mesure de l'effort appliqué sur ledit capteur d'effort détermine un couple de renversement exercé sur ledit corps, ledit couple de renversement donnant ainsi, à une erreur de mesure près engendrée par ledit couple résiduel, le couple moteur du moteur entraînant l'arbre.

8. Dispositif selon la revendication 1, **caractérisé par le fait que** les conduites d'entrées (56, 57 ; 72, 73) et respectivement les conduites de sorties (58, 59 ; 74, 75) des deux échangeurs de chaleur sont symétriques par rapport audit axe de symétrie.

## Patentansprüche

1. Bremsvorrichtung mit zwei Wärmetauschern, die auf beiden Seiten eines Rotors (16) der Vorrichtung angeordnet sind, um die Wärmeenergie beim Bremsen abzuführen, wobei jeder Wärmetauscher (40, 50, 80) so ausgelegt ist, dass eine vorgegebene Kühlflüssigkeitsstrecke (41, 51, 81a-81e) definiert wird, bei der die Zirkulation der Kühlflüssigkeit praktisch konstant im gleichen Umlaufssinn stattfindet, um die Druckverluste zu minimieren und den durch den Tauscher zirkulierenden Kühlflüssigkeitsstrom zu maximieren, um damit Variationen der Arbeitstemperatur des Wärmetauschers zu verringern, wobei die Zirkulation der Flüssigkeit in jedem der beiden Tauscher im Wesentlichen um eine Drehachse des Rotors erfolgt, **gekennzeichnet durch** eine Symmetrie der beiden Wärmetauscher (40, 50, 80) bezüglich einer zu der Drehsachse senkrechten Symmetrieachse, wobei die Eintrittsdurchlässe (46, 54, 83), Kreisläufe (41, 81) und Austrittsdurchlässe (47, 55, 84) für Wasser der Tauscher symmetrisch bezüglich der Symmetrieachse angeordnet sind, so dass die auf die Kühlflüssigkeitsströme zurückgehenden Kräfte kompensiert und so die entsprechenden Restmomente um die Drehachse minimiert werden, wobei die Zirkulationsrichtung in den beiden Tauschern einander entgegengesetzt ist und wobei die Vorrichtung eine Wirbelstrombremse ist, in der die thermische Energie auf Wirbelströme zurückgeht.

2. Vorrichtung gemäß Anspruch 1, **dadurch gekennzeichnet, dass** jede Kühlflüssigkeitsstrecke (41, 81a-81e) mehrere Abschnitte (41, 81 a-81 e) aufweist, die untereinander durch Verbindungskanäle (42, 42a, 42b, 82a-82d) verbunden sind.

3. Vorrichtung gemäß einem der Ansprüche 1 bis 2, **dadurch gekennzeichnet, dass** jede Kühlflüssigkeitsstrecke (51) im Wesentlichen spiralförmig ausgebildet ist.

4. Vorrichtung gemäß einem der Ansprüche 1 bis 3, **dadurch gekennzeichnet, dass** jede Kühlflüssigkeitsstrecke wenigstens teilweise durch maschinelle Bearbeitung hergestellt ist.

5. Vorrichtung gemäß einem der Ansprüche 1 bis 4, **dadurch gekennzeichnet, dass** jede Kühlflüssigkeitsstrecke (51) wenigstens teilweise durch Aufrollen einer Röhre (51) mit im Wesentlichen konstantem Querschnitt hergestellt ist.

6. Vorrichtung gemäß einem der Ansprüche 1 bis 5, **dadurch gekennzeichnet, dass** die beiden Tauscher im Wesentlichen identisch sind.

7. Vorrichtung gemäß einem der Ansprüche 1 bis 6, **dadurch gekennzeichnet, dass** sie dazu dient, die Messung des Drehmoments eines Motors durchzuführen, wobei die Vorrichtung einen als Halter für die Tauscher dienenden Körper (3) und eine Welle (7) aufweist, die drehbar bezüglich des Körpers montiert ist und dazu dient, mit dem Motor so gekoppelt zu werden, dass sie durch diesen in Rotation versetzt wird, wobei die Welle einen oder den Rotor (16) trägt, wobei der Körper schwingend montiert ist und einen rotationsverhindernden Arm aufweist, der über einen Kraftaufnehmer (6) so mit einem unbeweglichen Gestell (5) verbunden ist, dass eine Messung der auf den Kraftaufnehmer ausgeübten Kraft ein auf den Körper ausgeübtes Gegenmoment festlegt, wobei das Gegenmoment somit bis auf einen durch das Restmoment erzeugten Messfehler das Antriebsmoment des die Welle antreibenden Motors ergibt.

8. Vorrichtung gemäß Anspruch 1, **dadurch gekennzeichnet, dass** die Eintrittsleitungen (56, 57; 72, 73) beziehungsweise die Austrittsleitungen (58, 59; 74, 75) der beiden Wärmetauscher symmetrisch bezüglich der Symmetrieachse sind.

## Claims

1. Brake device, of the type comprising two heat exchangers located one on each side of a rotor (16) of said device for dissipating the thermal energy during braking, each heat exchanger (40, 50, 80,) designed to define a path (41, 51, 81a-81e) for the cooling liquid, which path is predetermined in order to circulate the cooling liquid practically constantly in one and the same direction of winding in order to minimize the pressure drops and maximize the rate of flow of cooling liquid circulating through the exchanger, with a view to reducing the variations in working temperature of the heat exchanger, wherein the circulation of liquid in each of the two exchangers is approximately about an axis of rotation of said rotor, **characterized by** a symmetry of the two heat exchangers (40, 50, 80) relative to an axis of symmetry perpendicular to the axis of rotation, of which the inlet passages (46, 54, 83), the circuits (41, 81) and the outlet passages (47, 55, 84) for water are arranged symmetrically relative to said axis of symmetry, so as to compensate for the forces due to the currents of cooling liquid and so as thus to minimize the corresponding residual torque about said axis of rotation, the directions of circulation in said two exchangers (40, 50, 80) being the opposite of one another, said brake device being an eddy-current brake device wherein the thermal energy is due to the eddy currents.

2. Device according to claim 1 **characterized in that** each path (41, 81a-81e) for cooling liquid comprises several sections (41, 81a-81e) connected together by connecting ducts (42, 42a, 42b, 82a-82d).

3. Device according to any one of claims 1 to 2, **characterized in that** each path (51) for cooling liquid is approximately in the form of a spiral.

4. Device according to any one of claims 1 to 3, **characterized in that** each path for the cooling liquid is produced at least partially by machining.

5. Device according to any one of claims 1 to 4, **characterized in that** each path (51) for the cooling liquid is produced at least partially by winding a tube (51) of approximately constant cross section.

6. Device according to any one of claims 1 to 5, **characterized in that** said two exchangers are approximately identical.

7. Device according to any one of claims 1 to 6, **characterized in that** it is intended to measure the torque of an engine, said device comprising a body (3) acting as a support for the heat exchangers and a shaft (7) mounted to rotate relative to the body and intended to be coupled to said engine in order to be rotatively driven by the same, said shaft carrying a or the rotor (16), said body supported so as to oscillate and comprising an anti-rotation arm which is connected to a stationary bed (5) by a load sensor (6) so that measuring the load applied to the load sensor determines a righting torque exerted on the body, said righting torque thus giving the engine torque of the engine driving the shaft, within a measurement error generated by said residual torque.

8. Device according to claim 1, **characterized in that** the inlet pipes (56, 57; 72, 73) and respectively the outlet pipes (58, 59; 74, 75) of the two heat exchangers are symmetric relative to said axis of symmetry.
